# EUROPÄISCHE PATENTSCHRIFT

(11) **EP 1 311 417 B1**
(45) Veröffentlichungstag und Bekanntmachung des Hinweises auf die Patenterteilung: **09.02.2005**
(21) Anmeldenummer: 01960143.4
(22) Anmeldetag: 03.08.2001
(51) Int. Cl.: B60T 8/36, B60T 13/68, B60K 31/06

(54) **ELEKTROMAGNETISCH BETÄTIGTES VENTIL, INSBESONDERE FÜR HYDRAULISCHE BREMSANLAGEN IN KRAFTFAHRZEUGEN**
ELECTROMAGNETICALLY ACTUATED VALVE, ESPECIALLY FOR HYDRAULIC BRAKING SYSTEMS IN MOTOR VEHICLES
SOUPAPE A ACTIONNEMENT ELECTROMAGNETIQUE, NOTAMMENT POUR DES SYSTEMES DE FREINAGE HYDRAULIQUES DANS DES VEHICULES AUTOMOBILES

(30) Priorität: 19.08.2000 DE 10040763
(43) Veröffentlichungstag der Anmeldung: 21.05.2003
(73) Patentinhaber: ROBERT BOSCH GMBH, 70442 Stuttgart (DE)
(72) Erfinder: HOFMANN, Dirk, 71636 Ludwigsburg (DE); SCHWARZ, Hans-Friedrich, 75417 Mühlacker (DE); HAHL, Gerhard, 70825 Korntal-Münchingen (DE); SCHUBITSCHEW, Valentin, 71679 Asperg (DE)
(86) Internationale Anmeldenummer: PCT/DE2001/002964
(87) Internationale Veröffentlichungsnummer: WO 2002/016180

(56) Entgegenhaltungen:
- EP-A- 0 670 445
- WO-A-97/28999
- DE-A- 19 802 464
- DE-A- 19 836 494

## Beschreibung

### Stand der Technik

Die Erfindung geht aus von einem elektromagnetisch betätigten Ventil nach der Gattung des Patentanspruchs 1.

Es ist schon ein solches Ventil bekannt (DE 41 34 490 A1), welches als Proportionaldruckregelventil ausgebildet ist. Zur Erzielung eines guten Regelverhaltens ist das bekannte, mit einem stromlos geschlossenen Sitzventil ausgestattete Druckregelventil nach dem Tauchanker-Prinzip gestaltet, das heißt der Polkern hat stirnseitig eine Eintiefung, in welche der im wesentlichen zylindrische Magnetanker in Abhängigkeit von einem elektrischen Strom, der einer den Polkern umhüllenden elektrischen Wicklung zugeführt wird, mehr oder weniger tief eintaucht. Dabei wird die auf den Magnetanker wirkende Magnetkraft von einer hydraulischen Kraft im Sinne einer Öffnung des Sitzventils unterstützt, während die Kraft der Rückstellfeder diesen Kräften entgegenwirkt.

Das bekannte Ventil hat jedoch den Nachteil, dass das Tauchanker-Prinzip erhöhte Aufwendungen bei der konstruktiven Gestaltung von Polkern und Magnetanker erfordert. Insbesondere sind geringe radiale Toleranzen zwischen dem Magnetanker und dem Polkern erforderlich, um kleine Nebenluftspalte zu erhalten. Dies wiederum bedingt eine aufwendige Führung des Magnetankers mit kleinen Führungsspielen, weil Querkräfte auf den Magnetanker zu Funktionsmängeln führen können. Das bekannte Ventil ist daher teuer in der Herstellung.

Außerdem ist aus DE 196 04 317 A1 ein nach dem Flachanker-Prinzip arbeitendes, elektromagnetisch betätigtes Ventil bekannt, welches ein stromlos offenes Sitzventil aufweist. Obwohl dieses bekannte Ventil wie ein Zweistellungs-Ventil (Auf-, Zu-Ventil) gestaltet ist, kann es durch Steuerung der Magnetkraft, welcher die Kraft einer Rückstellfeder sowie eine hydraulische Kraft entgegenwirkt, wie ein Proportionalventil bei kleinen Hüben in beliebig viele Zwischenstellungen überführt werden, ohne jedoch den aufwändigen Aufbau eines Proportionalventils aufzuweisen. Hierzu trägt im Wesentlichen die Gestaltung des Sitzventils sowie die Abstimmung von Magnetkraftkennlinie und Rückstellfeder bei.

### Vorteile der Erfindung

Das erfindungsgemäße, elektromagnetisch betätigte Ventil mit den Merkmalen des Patentanspruchs 1 hat gegenüber dem eingangs erwähnten Proportionalventil den Vorteil, dass es den einfachen Aufbau eines Zweistellungs-Ventils mit einem Flachanker hat, sich aber wie ein Proportionalventil verhält. Da beim Flachanker die Feldlinien des Magnetkreises im Arbeitsluftspalt im wesentlichen zwischen den einander zugewandten, ebenen Stirnflächen von Polkern und Magnetanker verlaufen, sind bei dieser Bauform Radialtoleranzen von geringem Einfluß. Ferner trägt die Gestaltung des Sitzventil- und Stößelbereichs zu einem stabilen Regelverhalten des als Druckregelventil arbeitenden, erfindungsgemäßen Ventils bei: Der auf der Seite des Druckmitteleinlasses herrschende Druck unterstützt die Magnetkraft zum Öffnen des Sitzventils. Aus dem Ventilsitz austretendes Druckmittel wird entlang dem Schließglied und dem Stößel turbulenzfrei gegen den Magnetanker gelenkt und übt eine öffnende Wirkung aus. Mit abnehmender Druckdifferenz zwischen Druckmitteleinlaß und Druckmittelauslaß vermindert sich diese Kraftwirkung und das Ventil gelangt bei Erreichen des stromabhängig eingestellten Drucks am Auslaß in eine stabile Abschlußstellung des Sitzventils. Dieser Regelvorgang läuft mit einer für viele Anwendungszwecke ausreichenden Dynamik und Regelgüte ab.

Eine vorteilhafte Ausgestaltung des erfindungsgemäßen Ventils ist im Anspruch 2 angegeben.

### Zeichnung

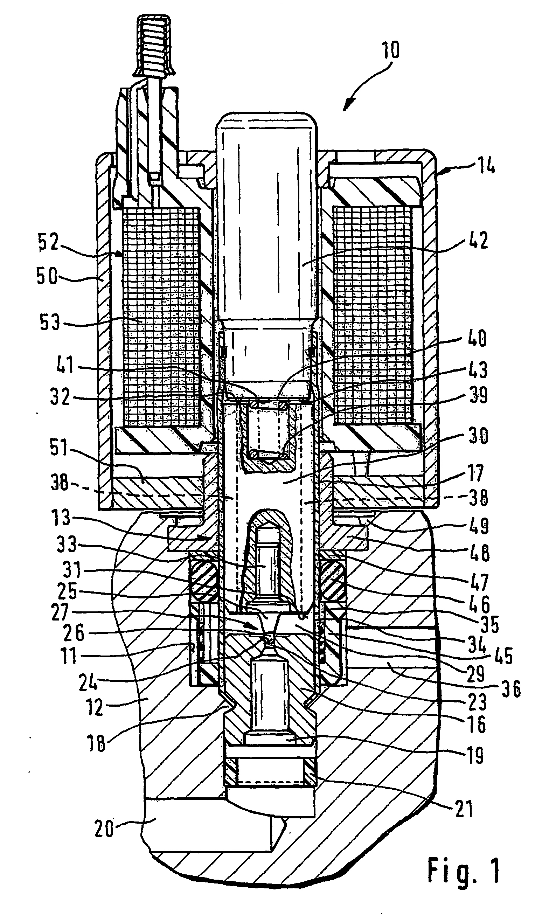

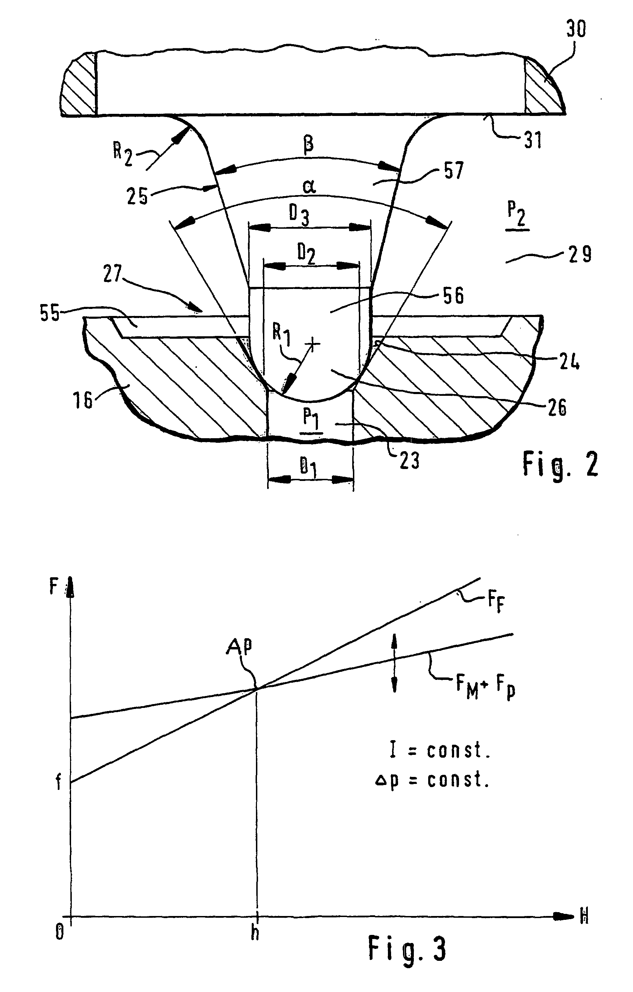

Ein Ausführungsbeispiel der Erfindung ist in der Zeichnung vereinfacht dargestellt und in der nachfolgenden Beschreibung nähert erläutert. Es zeigen Figur 1 einen Längsschnitt eines elektromagnetisch betätigten Ventils mit einem Sitzventil, Figur 2 das unbestromt in Schließstellung befindliche Sitzventil in gegenüber Figur 1 vergrößertem Maßstab und Figur 3 ein Diagramm der im Ventil über den Ventilöffnungshub wirkenden Kräfte.

### Beschreibung des Ausführungsbeispiels

Ein in Figur 1 der Zeichnung dargestelltes, elektromagnetisch betätigtes Ventil 10 für hydraulische Bremsanlagen von Kraftfahrzeugen, beispielsweise Fremdkraft-Bremsanlagen gemäß DE 195 46 647 A1, besteht im Wesentlichen aus zwei Baugruppen: einem in einer Stufenbohrung 11 eines Ventilblocks 12 befestigten hydraulischen Teil 13 und einem auf den hydraulischen Teil aufgesteckten elektrischen Teil 14.

Der hydraulische Teil 13 des Ventils 10 hat einen längs durchbohrten Ventilkörper 16, welcher mit einer Ankerführungshülse 17 verbunden ist. Der Ventilkörper 16 und die Ankerführungshülse 17 sind durch eine erste Verstemmverbindung 18 in der Stufenbohrung 11 des Ventilblocks 12 befestigt. Der Ventilkörper 16 weist einen Druckmitteleinlaß 19 des Ventils 10 auf, welcher mit einem am Bohrungsgrund der Stufenbohrung 11 einmündenden Zuströmkanal 20 für Druckmittel in Verbindung steht. Zwischen dem Druckmitteleinlaß 19 und dem Zuströmkanal 20 ist in der Stufenbohrung 11 eine Filterscheibe 21 aufgenommen.

Im vom Bohrungsgrund abgewandten Bereich ist der Ventilkörper 16 mit einer Zuströmbohrung 23 versehen, welche in einen hohlkegelförmigen Ventilsitz 24 übergeht. Dem Ventilsitz 24 ist ein an einem Stößel 25 ausgebildetes, halbkugelförmiges Schließglied 26 zugeordnet. Der Ventilsitz 24 und das Schließglied 26 bilden ein Sitzventil 27, das weiter unten anhand der Figur 2 näher beschrieben ist.

In der Ankerführungshülse 17 schließt sich auf den Ventilkörper 16 eine Ventilkammer 29 an, in der ein Magnetanker 30 längs bewegbar geführt ist. Der Magnetanker 30 hat im Wesentlichen die Gestalt eines geraden Kreiszylinders mit radial verlaufenden Stirnflächen 31 und 32. Von der dem Ventilkörper 16 zugewandten Stirnfläche 31 geht der Stößel 25 auf, welcher mit einem Zapfen 33 in den Magnetanker 20 eingepreßt ist. Der zwischen dem Ventilkörper 16 und dem Magnetanker 30 gelegene Teil der Ventilkammer 29 steht durch eine Öffnung 34 der Ankerführungshülse 17 mit einem Druckmittelauslaß 35 des Ventils 10 und weiter mit einem in die Stufenbohrung 11 einmündenden Abströmkanal 36 des Ventilblocks 12 in Verbindung. Abgesehen vom Stößel 25 ist der zwischen dem Ventilkörper 16 und dem Magnetanker 30 liegende Teil der Ventilkammer 29 frei von Einbauten.

Der Magnetanker 30 hat ein relativ großes Radialspiel zur Ankerführungshülse 17. Er ist mit zwei über seine gesamte Länge verlaufenden Längsnuten 38 versehen. In dem Magnetanker 30 ist im Bereich seiner vom Ventilkörper 16 abgewandten Stirnfläche 32 eine Rückstellfeder 39 in Form einer Schraubendruckfeder aufgenommen. Diese besitzt eine relativ hohe Steifigkeit und greift mit Vorspannung an einer Restluftspaltscheibe 40 an, welche an einer radial verlaufenden Stirnfläche 41 eines Polkerns 42 abgestützt ist. Der Polkern 42 greift mit einem Teil seiner Länge in die Ankerführungshülse 17 ein, mit der er druckmitteldicht verbunden ist. Zwischen der Stirnfläche 32 des Magnetankers 30 und der Restluftspaltscheibe 40 befindet sich ein den Öffnungshub des Ventils 10 bestimmender Arbeitsluftspalt 43.

In der Stufenbohrung 11 des Ventilblocks 12 ist mantelseitig der Ankerführungshülse 17 eine zwischen dem Druckmittelauslaß 35 und dem Abströmkanal 36 angeordnete Filterhülse 45 aufgenommen. Auf diese folgt zur Mündung der Stufenbohrung 11 hin ein Dichtring 46, eine Scheibe 47 und eine Buchse 48, welche durch eine zweite Verstemmverbindung 49 in der Stufenbohrung 11 des Ventilblocks 12 befestigt ist.

Der auf den hydraulischen Teil 13 des Ventils aufgesteckte elektrische Teil 14 hat eine von einem Gehäuse 50 mit einer Ringscheibe 51 umschlossene Spule 52 mit einer elektrischen Wicklung 53. Während das Gehäuse 50 radial innen an den Polkern 42 anschließt, stellt die Ringscheibe 51 eine Verbindung zur Buchse 48 her.

Der Magnetanker 30, der Polkern 42, die Buchse 48, das Gehäuse 50 und die Ringscheibe 51 bestehen aus magnetisch leitendem Werkstoff, während die Ankerführungshülse 17 und die Restluftspaltscheibe 40 magnetisch nicht leitend sind. Ein bei bestromter elektrischer Wicklung 53 erzeugter Magnetkreis verläuft über den Polkern 42, die Restluftspaltscheibe 40, den Magnetanker 30, die Ankerführungshülse 17, die Ringscheibe 51 und das Gehäuse 50 des elektrischen Teils 14. Dabei arbeiten der Magnetanker 30 und der Polkern 42 nach dem Flachanker-Prinzip zusammen.

Der für die Funktion des Ventils 10 als Druckregelventil wichtige Bereich des Sitzventils 27 weist folgende konstruktive Merkmale auf, welche anhand Figur 2 beschrieben werden:

Der hohlkegelförmige Ventilsitz 24 hat einen Kegelwinkel α, welcher höchstens 75° beträgt. Der Ventilsitz 24 ist gegen die Ventilkammer 29 durch eine ebene Eintiefung 55 des Ventilkörpers 16 scharfkantig begrenzt. Der Radius R₁ des halbkugelförmigen Schließglieds 26 ist auf den Ventilsitz 24 derart abgestimmt, dass der Durchmesser D₁ der Zuströmbohrung 23 nahezu dem Dichtdurchmesser D₂ des Sitzventils 27 entspricht. Auf das Schließglied 26 folgt ein relativ kurzer zylindrischer Abschnitt 56 des Stößels 25.

Der zylindrische Abschnitt 56 hat einen dem zweifachen Radius R₁ des Schließglieds 26 entsprechenden Durchmesser D₃. An den zylindrischen Abschnitt 56 schließt sich gegen den Magnetanker 30 ein kegelförmiger Abschnitt 57 des Stößels 25 stufenfrei an. Dieser hat einen Kegelwinkel β von ca. 35° und geht mit ausgerundetem Übergang mit dem Radius R₂ in die Stirnfläche 31 des Magnetankers 30 stufenfrei über.

In der Zuströmbohrung 23 herrscht ein Druck p₁, der im Falle der Verwendung des Ventils 10 in der vorstehend erwähnten Fremdkraft-Bremsanlage von einer Hochdruckpumpe oder einem Druckmittelspeicher bereitgestellt wird. In der Ventilkammer 29 kann ein Druck p₂ zwischen dem Wert 0 und p₁ herrschen.

Das elektromagnetisch betätigte Ventil 10 hat folgende Funktionsweise:

Es wird von einem stromlosen Zustand der elektrischen Wicklung 53 ausgegangen, so daß das Sitzventil 27 seine Schließstellung (wie in den Figuren 1 und 2 dargestellt) einnimmt. Zuströmseitig des Sitzventils 27 herrscht ein relativ hoher Druck p₁, abströmseitig ein sehr niedriger Druck p₂. Die vorgespannte Rückstellfeder 39 übt eine Kraft f auf den Magnetanker 30 und den Stößel 25 aus, welche das Sitzventil 27 bis zu einem zulässigen Maximalwert des Druckes p₁ in der Schließstellung hält. In dem Diagramm der Figur 3, welches den Verlauf der im Ventil 10 über den Ventilöffnungshub H wirkenden Kräfte F, nämlich Federkraft F_{F}, Magnetkraft F_{M} und Hydraulikkraft Fₚ, wiedergibt, ist diese Vorspannkraft f der Feder 39 an der Ordinate beim Hub 0 angegeben. Im Diagramm ist der Verlauf der von der Rückstellfeder 39 herrührenden Federkraft F_{F} als gerade Linie angegeben, die einen mit zunehmendem Ventilöffnungshub H monoton steigenden Verlauf aufweist. Für die relativ große Steigung der Federkraft-Kennlinie ist die hohe Steifigkeit der Rückstellfeder 39 maßgebend. Die zweite Kennlinie gibt den Verlauf der additiv miteinander verknüpften Magnetkraft F_{M} und Hydraulikkraft Fₚ bei einem konstanten Strom I und einer konstanten Druckdifferenz δₚ zwischen den Drücken p₁ und p₂ wieder. Die Kennlinie F_{M} + Mₚ hat einen mit zunehmendem Ventilöffnungshub H monoton steigenden Verlauf, deren Steigung jedoch geringer ist als diejenige der Kennlinie F_{F}. Dieser relativ flache Verlauf der Kennlinie F_{M} + Fp ist im Wesentlichen durch die Auslegung des Magnetkreises erzielt und zwar durch einen relativ großen Arbeitsluftspalt 43 und eine relativ dicke Restluftscheibe 40. Außerdem ist der Einfluß der Hydraulikkraft Fₚ an Stößel 25 und Magnetanker 30 gering gehalten dadurch, dass der Dichtdurchmesser D₂ relativ klein und der Magnetanker 30 allseitig druckmittelumspült ist. Im Schnittpunkt der beiden Kennlinien liegt der Arbeitspunkt AP des Ventils 10, bei dem das Sitzventil 27 einen Arbeitshub h einnimmt. Durch Verändern des an die elektrische Wicklung 53 der Spule 52 angelegten Stromes I ist die Kennlinie F_{M} + Fₚ im Diagramm verschiebbar und demgemäß der Arbeitspunkt AP auf einen anderen Hub h einstellbar.

Beim Bestromen der elektrischen Wicklung 53 der Spule 52 wirkt die Magnetkraft F_{M} in öffnendem Sinne auf den Magnetanker 30. Öffnend auf den Stößel 25 wirkt auch die durch den Differenzdruck p₁ - p₂ gegebene Hydraulikkraft Fₚ. Die demgegenüber schließend wirkende Kraft F_{F} der Rückstellfeder 30 wird bei ausreichend hohem Strom I überwunden und das Sitzventil 27 öffnet. Druckmittel strömt vom Druckmitteleinlaß 19 zum Druckmittelauslaß 35 des Ventils 10. Dabei fließt Druckmittel entlang dem Stößel 25 zur Stirnfläche 31 von Stößel und Magnetanker 30 und übt eine öffnende Wirkung auf diesen aus. Mit steigendem Druck p₂ in der Ventilkammer 29 tritt ein Druckungleichgewicht am Magnetanker 30 auf, welches die öffnend wirkende Hydraulikkraft Fₚ mindert. Die von der Rückstellfeder 30 bereitgestellte Federkraft F_{F} überführt das Sitzventil 27 in die Schließstellung, wenn der dem elektrischen Strom I zugeordnete abströmseitige Druck p₂ erreicht ist. Aufgrund der Auslegung des Ventils 10 ist der abströmseitige Druck p₂ proportional zu dem der elektrischen Wicklung 53 aufgeschalteten Strom I.

Das elektromagnetisch betätigte Ventil 10 ist bei kleinen Störungen selbststabilisierend:
Der Arbeitspunkt AP des Ventils 10 wird eingenommen, wenn Kräftegleichgewicht zwischen der Magnetkraft F_{M}, der Hydraulikkraft F und der Federkraft F_{F} gegeben ist. Störungen dieses Kräftegleichgewichts, zum Beispiel durch Schwankungen der Hydraulikkraft Fₚ verursacht, führen nur zu einer kurzzeitigen Verschiebung des Arbeitspunktes AP: so führt eine Vergrößerung der Hydraulikkraft Fₚ zu einer Vergrößerung des Ventilöffnungshubes H mit der Folge, daß zugleich die Federkraft F_{F} ansteigt. Dies hat zwar zunächst eine Verlagerung des Arbeitspunktes AP auf der Federkraft-Kennlinie F_{F} zur Folge, die jedoch nach Wegfall der hydraulischen Störung durch Rückführen des Magnetankers 30 durch die Federkraft F_{F} auf den Arbeitshub h ausgeglichen wird.

Das Ventil 10 ist in unbestromtem Zustand auch als Druckbegrenzungsventil verwendbar:
Bei am Druckmitteleinlaß 19 herrschenden Drücken p₁, welche eine öffnend wirkende Hydraulikkraft Fₚ kleiner als die Vorspannkraft f der Rückstellfeder 39 hervorrufen, verharrt das Sitzventil 27 in seiner Schließstellung. Wird dagegen bei höheren Drücken die Vorspannkraft f der Rückstellfeder 39 überwunden, so öffnet das Sitzventil 27 und Druckmittel kann vom Druckmitteleinlaß 19 des Ventils 10 zu dessen Druckmittelauslaß 35 druckbegrenzend abströmen.

## Patentansprüche

1. Elektromagnetisch betätigtes Ventil (10), insbesondere für hydraulische Bremsanlagen in Kraftfahrzeugen, mit den folgenden Merkmalen:
- es ist ein stromlos geschlossenes Sitzventil (27) zwischen einem Druckmitteleinlaß (19) und einem Druckmittelauslaß (35) vorgesehen,
- das Sitzventil (27) hat einen hohlkegelförmigen Ventilsitz (24) und ein an einem Stößel (25) ausgebildetes, halbkugelförmiges Schließglied (26),
- in den Ventilsitz (24) mündet zentrisch eine mit dem Druckmitteleinlaß (19) in Verbindung stehende Zuströmbohrung (23),
- an dem Stößel (25) greift ein öffnend auf das Sitzventil (27) wirkender Magnetanker (30) an, dem stößelabgewandt ein Polkern (42) zugeordnet ist,
- an dem Magnetanker (30) ist eine schließend auf das Sitzventil (27) wirkende, vorgespannte Rückstellfeder (39) abgestützt,
**gekennzeichnet durch** die weiteren Merkmale:
- der Durchmesser (D₁) der Zuströmbohrung (23) entspricht nahezu dem Dichtdurchmesser (D₂) des Sitzventils (27),
- der Kegelwinkel (α) des Ventilsitzes (24) beträgt höchstens 75°,
- aus dem Ventilsitz (24) austretendes Druckmittel ist stufenfrei entlang dem Stößel (25) zu einer radial verlaufenden, weitgehend ebenen Stirnfläche (31) des Magnetankers (30) mit ausgerundetem Übergang zwischen Stößel (25) und Magnetanker (30) leitbar,
- der Magnetanker (30) und der Polkern (42) arbeiten nach dem Flachanker-Prinzip zusammen,
- der Magnetkreis des Ventils (10) ist derart ausgebildet, daß die auf den Magnetanker (30) ausgeübte, auf das Schließglied (26) übertragene Magnetkraft (F_{M}) stufenlos veränderbar ist, wobei deren Verlauf mit zunehmendem Ventilöffnungshub (H) zusammen mit einer vom Druckmittel herrührenden, auf Schließglied (26) und Magnetanker (30) wirkenden Hydraulikkraft (Fₚ) monoton steigt,
- die von der Rückstellfeder (39) herrührende Kraft (F_{F}) am Schließglied (26) ist derart abgestimmt, daß sie einen mit zunehmendem Ventilöffnungshub (H) monoton steigenden Verlauf aufweist, dessen positive Steigung größer ist als diejenige des Magnet- und Hydraulikkraftverlaufs.

2. Ventil nach Anspruch 1, **dadurch gekennzeichnet, daß** das halbkugelförmige Schließglied (26) stufenlos an einem zylindrischen Abschnitt (56) des Stößels (25) angeformt ist, auf den ventilsitzabgewandt ein kegelförmiger Abschnitt (57) des Stößels (25) mit geringer Konizität stufenlos folgt, an den sich nach einem Übergangsradius (R₂) eine radial verlaufende Stirnfläche (31) des Stößels (25) und/oder des Magnetankers (30) anschließt.

## Claims

1. Electromagnetically operated valve (10), in particular for hydraulic braking systems in motor vehicles, having the following features:
- a seat valve (27), which is closed with no current flowing, is provided between a pressure medium inlet (19) and a pressure medium outlet (35),
- the seat valve (27) has a hollow conical valve seat (24) and a hemispherical closing element (26) formed on a plunger (25),
- an inlet flow bore (23), which is connected to the pressure medium inlet (19), opens centrally into the valve seat (24),
- a magnet armature (30) which acts on the seat valve (27) to open it and has an associated pole core (42) facing away from the plunger, acts on the plunger (25),
- a prestressed restoring spring (39), which acts on the seat valve (27) to close it, is supported on the magnet armature (30),
**characterized by** the further features:
- the diameter (D₁) of the inlet flow bore (23) corresponds approximately to the sealing diameter (D₂) of the seat valve (27),
- the cone angle (α) of the valve seat (24) is at most 75°,
- pressure medium emerging from the valve seat (24) can be carried without any discontinuities along the plunger (25) to a radially running largely planar end surface (31) of the magnet armature (30) with a rounded transition between the plunger (25) and the magnet armature (30),
- the magnet armature (30) and the pole core (42) interact in accordance with the flat armature principle,
- the magnetic circuit of the valve (10) is designed such that the magnetic force (F_{M}) which is exerted on the magnet armature (30) and is transmitted to the closing element (26) can be varied without any discontinuities, with its profile rising monotonally, as the valve opening travel (H) increases, together with a hydraulic force (Fₚ) which is produced by the pressure medium and acts on the closing element (26) and the magnet armature (30), and
- the force (F_{F}) which is produced by the restoring spring (39) is matched to the closing element (26) such that it has a profile which rises monotonally as the valve opening travel (H) increases and whose positive gradient is greater than that of the magnetic and hydraulic force profile.

2. Valve according to Claim 1, **characterized in that** the hemispherical closing element (26) is integrally formed on a cylindrical section (56) of the plunger (25) without any discontinuities, which is followed without any discontinuities, facing away from the valve seat, by a conical section (57) of the plunger (25) with less conicity which is followed, after a transition radius (R₂), by a radially running end surface (31) of the plunger (25) and/or of the magnet armature (30).

## Revendications

1. Soupape à actionnement électromagnétique, notamment pour des systèmes de freinage hydrauliques dans des véhicules automobiles, comprenant :
- une soupape à siège (27) fermée sans courant est prévue entre une admission de pression (19) et un échappement de pression (35).
- la soupape à siège (27) est dotée d'un siège de soupape (24) en forme de cône creux et d'un organe de fermeture (26) hémisphérique formé contre un taquet (25),
- un alésage d'afflux (23) relié à l'admission de pression (19) débouche au centre dans le siège de soupape (24),
- en prise sur le taquet (25), un encrage magnétique (30) agissant pour l'ouverture de la soupape à siège (27) est associé à un noyau polaire (42) à l'opposé du taquet est en prise sur le taquet (25),
- un ressort de rappel (39) précontraint, agissant sur la soupape à siège (27) pour sa fermeture, s'appuie contre l'encrage magnétique (30),
**caractérisée en ce que**
- le diamètre (D₁) de l'alésage d'afflux (23) correspond quasiment au diamètre d'étanchéité (D₂) de la soupape à siège (27),
- l'angle de cône (α) du siège de soupape (24) est au maximum de 75°,
- le moyen de pression sortant du siège de soupape (24) peut être guidé progressivement le long du taquet (25) en direction d'une face avant (31) de l'encrage magnétique (30) largement plane et s'étendant radialement avec un passage arrondi entre le taquet (25) et l'encrage magnétique (30),
- l'encrage magnétique (30) et le noyau polaire (42) fonctionnent conjointement suivant le principe de l'ancrage plat,
- le circuit magnétique de la soupape (10) est conçu de manière à ce que la force magnétique (F_{M}) exercée sur l'encrage magnétique (30) et transférée à l'organe de fermeture (26) puisse être modifiée progressivement, son allure augmentant de manière régulière avec l'élévation croissante de l'ouverture de soupape (H) ainsi qu'avec une force hydraulique (Fₚ) provenant du moyen de pression et agissant sur l'organe de fermeture (26) et l'encrage magnétique (30),
- la force (F_{F}) provenant du ressort de rappel (39) est déterminée sur l'organe de fermeture (26) de manière à présenter une allure augmentant de manière régulière avec l'élévation croissante de l'ouverture de soupape (H), l'augmentation positive de cette allure étant supérieure à celle de l'allure de la force hydraulique et magnétique.

2. Soupape selon la revendication 1,
**caractérisée en ce que**
l'organe de fermeture (26) hémisphérique est formé progressivement contre une section cylindrique (56) du taquet (25) que suit progressivement, dans la direction opposée au siège de soupape, une section en forme de cône (57) du taquet (25) avec une conicité plus faible auquel se raccorde suivant un rayon de transition (R₂) une face avant (31) du taquet (25) et/ou de l'encrage magnétique (30) s'étendant radialement.
